# EUROPEAN PATENT SPECIFICATION

(11) **EP 1 838 047 B1**
(45) Date of publication and mention of the grant of the patent: **02.06.2010**
(21) Application number: 07104717.9
(22) Date of filing: 22.03.2007
(51) Int. Cl.: H04W 8/26, H04L 12/28

(54) **Reciprocal identification between communications devices implementing a bluetooth communication protocol**
Gegenseitige Identifizierung von Kommunikationsvorrichtungen mit einem Bluetooth-Kommunikationsprotokoll
Identification réciproque entre des dispositifs de communication mettant en oeuvre un protocole de communication bluetooth

(30) Priority: 24.03.2006 IT TO20060220
(43) Date of publication of application: 26.09.2007
(73) Proprietor: FIAT AUTO S.p.A., 10135 Torino (IT)
(72) Inventor: Da Fre', Dario, 10135, TORINO (IT)
(74) Representative: Jorio, Paolo

(56) References cited:
- EP-A- 1 322 071
- EP-A- 1 384 626
- DE-A1-102004 017 603
- DE-A1-102005 001 267
- "BLUETOOTH SPECIFICATION Version 1.1, Profiles, 6.3 Name Discovery, Part K:4 INTERCOM PROFILE" INTERNET CITATION, [Online] 22 February 2001 (2001-02-22), XP002410703 Retrieved from the Internet: URL:http://www.bluetooth.org> [retrieved on 2006-12-07]
- "Master Table of Contents & Compliance Requirements, Covered Core Package version: 2.0 + EDR" INTERNET CITATION, [Online] 4 November 2004 (2004-11-04), XP002410704 Retrieved from the Internet: URL:http://www.bluetooth.org> [retrieved on 2006-12-07]

## Description

The present invention relates to a system and a method for reciprocal identification between communications devices implementing a Bluetooth communication protocol.

In particular, the present invention relates to a system and a method wherein communication devices corresponding to user interface devices installed on board road vehicles, such as motorcars, lorries, and coaches for example, are able to identify themselves to each other during the "pairing" phase specified under the Bluetooth communication protocol; to which the following description will make specific reference without in any way detracting from the general perspective.

In fact, the present invention can also be applied to advantage but not exclusively to Bluetooth communications set up between user interface devices including, for example, personal computers, personal digital assistants (known under the acronym PDA) or any other similar electronic communication device.

As is known, some of the latest generation of road vehicles are provided on board with a communication device, referred to hereinafter as a user interface device, which is able to actuate a short-range wireless communication with other portable communication equipment, such as cellular telephones, computers and personal digital assistants for example, used by the user to fulfil different functions.

Short-range communication of this type is made possible when the portable communication equipment is placed inside the passenger compartment of the vehicle, and its purpose is to make the different functions that can be implemented by the portable communication equipment itself available on the user interface device, thereby making the equipment easier to use while driving, with obvious benefits in terms of road safety.

It is known moreover that the exchange of information between users of road vehicles through user interface devices and/or portable communication equipment found typically on board vehicles, is one of the main issues of today with a great deal of work and effort being expended for the purpose of improving and simplifying direct communication between one road vehicle user and the users of other road vehicles.

DE102005001267 discloses a system and method for information dissemination in a wireless mobile ad hoc network.

DE102004017603 discloses a direct vehicle to vehicle communication signal transmission procedure using relay links through successive vehicles with transmission addresses so that each link in a communication chain has an address determining its position in the sequence.

Document "BLUETOOTH SPECIFICATION Version 1.1, Profiles, 6.3 Name Discovery, Part K:4 INTERCOM PROFILE retrieved from the Internet and published on 22 February 2001 relates to specification of the Bluetooth system.

Document "Master Table of Contents & Compliance Requirements, Covered Core Package version: 2.0 + EDR" retrieved from the Internet and published on 4 November 2004 relates to specification of the Bluetooth system.

EP1384626 discloses a wireless communication repeater station comprising receiving portion which receives a specific electric wave signal from an outside or inside of an automobile, amplifying portion which amplifies the signal from receiving portion, and transmission portion, which transmits the signal amplified in amplifying portion is accommodated within an interior mirror provided on an automobile, and wireless communication repeater station forms a part of network connecting to electronic apparatuses within the automobile.

EP1322071 discloses a method for identifying a terminal in a wireless data transmission system. The system comprises a first device, which comprises a first device-specific device identifier and a general device name, and a second device, which is arranged to store name identifier in its memory. The first device identifier and the general device name are informed to the second device. A list of received device names is shown to the user in the second device. The second device is arranged to link device identifier to the name identifier stored in the memory. The first device identifier is compared with the device identifiers linked to the name identifiers in the second device and the name identifier linked to the device identifiers corresponding to the first device identifier is selected and shown in place of the device name on the list drawn up of the device names.

The purpose of the present invention is to implement a communication system between communication devices, preferably installed on board road vehicles, which allows the respective users, positioned at a reduced distance one from the other, to be able to communicate with each other through a short-range wireless communication using the Bluetooth protocol.

The aforementioned purpose is attained by the present invention in so far as it relates to a short-range communication system between communication devices embodied according to the disclosure in claim 1, and preferably, in any one of the following claims directly or indirectly dependent on claim 1.

The present invention will now be described with reference to the appended drawings, which illustrate a non-restrictive embodiment example thereof, wherein:
- figure 1 shows in diagrammatic form a system for reciprocal identification between communication devices implementing a Bluetooth communication protocol implemented in accordance with the dictates of the present invention; and
- figure 2 is a flow chart setting out the operations undertaken by the system shown in figure 1 during the operation thereof.

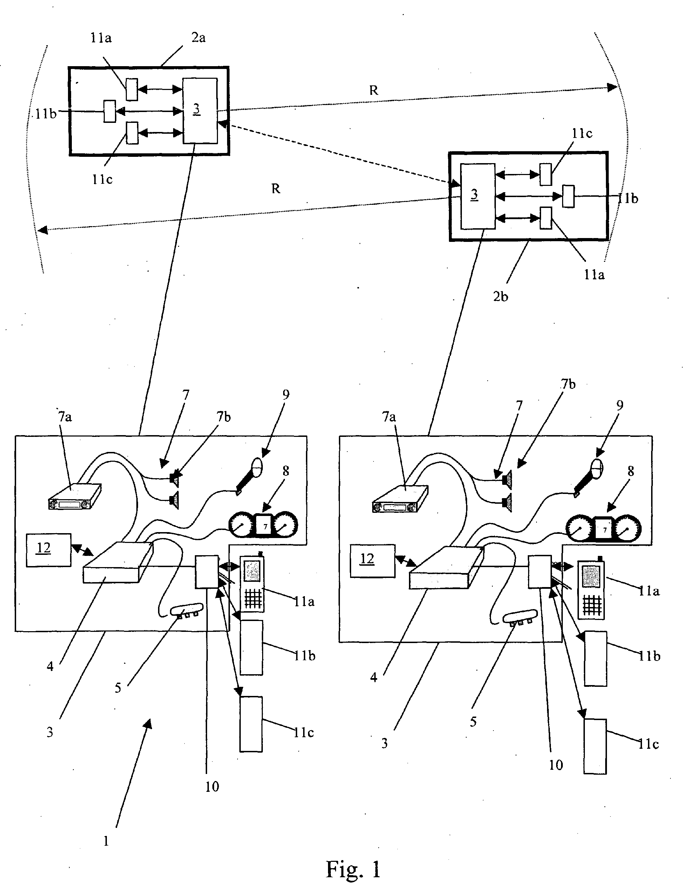

With reference to figure 1, the number 1 is used to indicate as a whole a system for reciprocal identification between communication devices implementing a Bluetooth communication protocol.

In particular, in the example shown in figure 1 the communication system 1 comprises at least two road vehicles, each of which is provided internally with a communication device corresponding to a user interface device 3, which is able to effect a short-range wireless communication with a user interface device 3 placed on board another road vehicle, which is located at a distance from the "calling" road vehicle within a pre-set range R.

In the example shown in figure 1, the system 1 is provided with a pair of road vehicles shown as 2a and 2b respectively, but obviously it may comprise any number of road vehicles, provided with user interface devices 3.

With reference to figure 1, each user interface device 3 preferably comprises a voice-activated device provided essentially with: a processing unit 4 able to manage the different functions that can be implemented by the system; a command keypad 5, through which the user is able to give commands to the processing unit 4; and a sound reproducing device 7 comprising for example a car radio 7a and at least one loudspeaker 7b for reproducing the voice or sound messages transmitted by the users of the other road vehicles.

The user interface device 3 comprises, moreover, a display device 8 consisting for example of a screen able to display the names of the users of the other user interface devices 3 of the vehicles which are available to converse with the user of the "calling" vehicle 2.

The user interface device 3 comprises, moreover, a sound message acquisition device 9, such as a microphone for example in order to allow the user to talk to the users of the other vehicles with which a communication is underway; and a piece of communication equipment 10, which is able to effect a short-range wireless communication using the Bluetooth communication protocol.

The user interface device 3 comprises, lastly, an internal memory 12 containing a "pre-specified Bluetooth name", which allows the user interface device 3 to be identified or rather recognised during Bluetooth communications between it and other Bluetooth equipment.

The system 1 comprises, moreover, one or more pieces of portable communication equipment, each able to effect a short-range communication using the Bluetooth communication protocol with the user interface device 3.

The portable communication equipment may, for example, comprise a cellular telephone 11a, and/or a computer 11b and/or a PDA (acronym for Personal Digital Assistant) 11c, or any other similar portable communication equipment which is able to effect a Bluetooth communication with the user interface device 3 installed on board the vehicle.

To each piece of portable communication equipment can be allocated, in a known way, a "Bluetooth user name", which identifies unambiguously the user of the vehicle, preferably the driver thereof, and is able to be communicated to the user interface device 3 during an initial "pairing" phase between the latter and the portable communication equipment itself.

In particular, the user interface device 3 stores in its own internal memory 12 the Bluetooth user name received during the pairing phase; as will now be described, the user interface device 3 will provide for the transmission, during a recognition phase, to the other user interface devices 3 installed in the other vehicles, of a "Bluetooth identification name" containing the Bluetooth user name set up by the user, and preferably, but not necessarily, the pre-specified Bluetooth name associated with the user interface device 3.

To be more specific, the user interface device 3 is able to encode in the Bluetooth identification name only the Bluetooth user name set up by the user, or may encode where appropriate a concatenation or union between the latter and the pre-specified Bluetooth name associated with the user interface device 3.

For example, if the Bluetooth user name set up by the user corresponds to "USER-NAME" and the pre-specified Bluetooth name associated with the user interface device 3 corresponds to "MY-CAR", the user interface device 3 may encode in the Bluetooth identification name the Bluetooth user name " USER-NAME", or the concatenation "MY-CAR-USER-NAME".

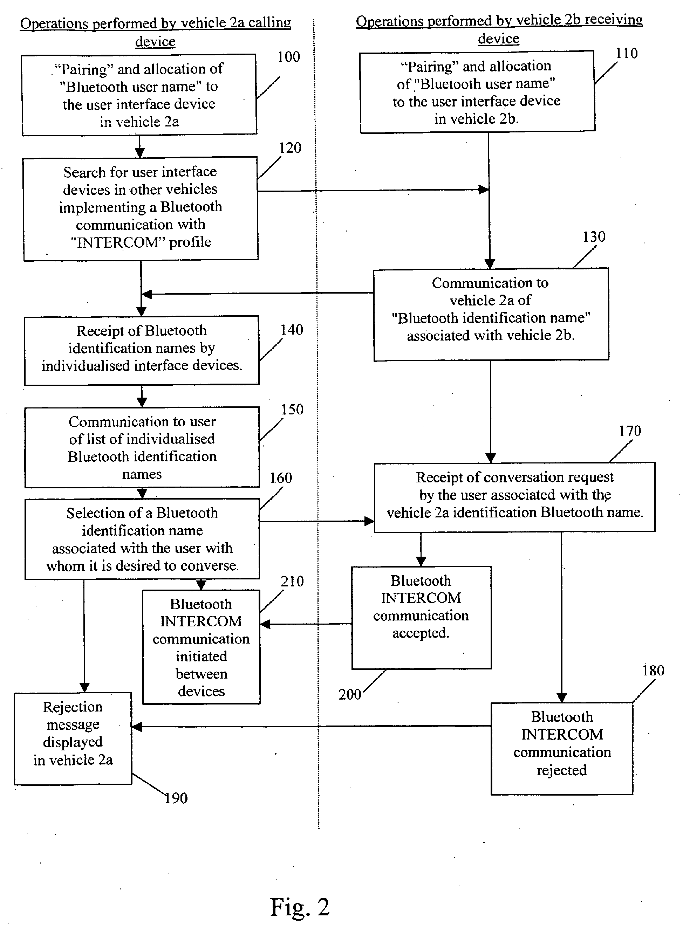

With reference to figure 2 a flow chart is shown setting out the operations implemented by the "calling" user interface device 3, installed on board the vehicle 2a of a user wishing to activate a conversation request with a "receiving" user interface device 3 installed on board the vehicle 2b of a user potentially interested in the conversation.

In the initial phase, the users of vehicles 2a and 2b each effect an operation to allocate to the respective user interface device 3 a Bluetooth user name which is associated with one of the pieces of portable communication equipment present on board the respective vehicles 2a and 2b (boxes 100 and 110).

In particular, in this phase, the users of the vehicles 2a and 2b each make provision to activate a connection between their own portable communication equipment and the user interface device 3 installed on board the corresponding vehicle 2a and 2b, which receives and stores the Bluetooth user name contained in the cellular telephone 11a, or in the computer 11b, or in the PDA 11c present on board the vehicle.

It should be pointed out that an allocation of this kind can be made automatically following the Bluetooth connection between the portable communication equipment and the user interface device 3 or rather during the pairing according to a fixed priority associated with the typology of the portable communication equipment present on board the vehicle.

For example, the system 1 may provide for maximum priority for the cellular telephone 11a, intermediate priority for the computer 11b and the PDA 11c, and minimum priority for any other portable communication equipment present on board the vehicle.

In this way the system 1 is able to allocate the Bluetooth user name automatically to the user interface device 3 as a function of the priority of the portable electronic equipment which is communicating with the interface device 3 itself. For example if the user interface device 3 is connected either to the cellular telephone 11a or to the PDA 11c, to which different Bluetooth user names have been allocated by the user himself, then the name allocated to the user interface device 3 is that of the portable electronic equipment with the highest priority in other words that of the cellular telephone 11a. In the event of the Bluetooth connection between the cellular telephone 11a and the user interface device 3 being interrupted, for example because the cellular telephone 11a is disconnected or switched off, the system 1 makes provision to allocate to the user interface device 3 the Bluetooth name of the PDA 11c.

According to a different form of implementation the user interface device 3 of the system 1 is able to implement a known algorithm which automatically allocates to the Bluetooth user name the union or concatenation of more Bluetooth user names received by the corresponding portable equipment present on board the vehicle.

Following the allocation of the Bluetooth user name, the user interface device 3 of the vehicle makes provision to specify the Bluetooth identification name, allocating thereto the Bluetooth user name received, or the union between the latter and the pre-specified Bluetooth name.

At this point the user of the vehicle 2a commands the interface device 3 of the vehicle 2a, for example through the command keypad 5 or through an appropriate search command button (not shown), or with a voice command, to activate a search function of the interface devices 3 present on board the vehicles 2b present in the vicinity of the vehicle 2a itself at a distance therefrom that is within the pre-set communication range R provided by the Bluetooth protocol (box 120).

In this case, the search function implemented by the interface device 3 is applied subsequent to the information search and exchange operations provided by the "INTERCOM" profile in relation to the Bluetooth protocol. In other words, the interface device 3 searches within the communication range R provided by the "INTERCOM" profile for the user interface devices 3 of other vehicles 2b which are able to establish a Bluetooth communication using the "INTERCOM" profile.

In the example shown, in the situation where the receiving vehicle 2b is placed at a distance from the calling vehicle 2a within the range R, the interface device 3 of vehicle 2a establishes a Bluetooth communication with the interface device 3 of vehicle 2b which notifies the corresponding identification Bluetooth name (box 130).

It should be pointed out that the connection between the user interface devices 3 is made by implementing an information exchange provided by the INTERCOM profile of the Bluetooth protocol which, since it is known, will not be described below.

It should further be pointed out that the operation to "recognise" or rather to receive the Bluetooth identification name is reiterated by the user interface device 3 of vehicle 2a with all the interface devices 3 of the receiving vehicles 2b present at a distance from the calling vehicle 2a within the maximum communication range R (box 140) established by the "INTERCOM" profile.

At the end of the above-mentioned recognition operation, the processing unit 4 of the user interface device 3 of the calling vehicle 2a provides the user of the vehicle 2a itself with a list, through the display equipment 8 or through a Text To Speech function of the Bluetooth identification names notified by the user interface devices 3 of the other vehicles 2b (box 150).

At this point, the user of the vehicle 2a selects, through the command keypad or with a voice command, the Bluetooth identification name associated with the user interface device 3 of the vehicle with which he wishes to effect a short-range communication (box 160).

When the Bluetooth user name has been selected, the user interface device 3 of vehicle 2a sends a communication request to the interface device 3 associated with the Bluetooth identification name selected. A communication request sent in this way contains the Bluetooth identification name associated with the user interface device 3 of the "calling" vehicle 2a (box 170).

At this point, the user interface device 3 of vehicle 2b receives the communication request, decodes the Bluetooth vehicle identification name of the user interface device 3 of the calling vehicle 2a, and signals to the user of the vehicle 2b the request for conversation by an interface device 3 associated with the Bluetooth identification name received. This may be a light and/or sound signal, while the Bluetooth identification name of the user interface device 3 of the "calling" vehicle 2a may be communicated through the display equipment 8 and/or through a voice message generated by the sound reproducing equipment 7 (box 170).

At this point, the user of the vehicle 2b may agree or refuse to activate the "conversation" with the user of vehicle 2a by sending, via the keypad or a voice message, an accept or reject command.

In the event of the user of the vehicle 2b sending a reject command (box 180), the user interface device 3 of vehicle 2b sends a Bluetooth signal encoding the rejection. In this phase, the user interface device 3 of vehicle 2a receives the Bluetooth signal encoding the rejection and notifies the user visually and/or vocally of the non-acceptance of the conversation by the user of the user interface device 3 of vehicle 2b (box 190).

If on the other hand the user of vehicle 2b sends a conversation accept command (box 200), the user interface device 3 of vehicle 2b sends a Bluetooth signal encoding said acceptance. In this phase, the user interface device 3 of vehicle 2a receives the Bluetooth signal encoding conversation acceptance and establishes a direct communication using the "INTERCOM" profile with the user interface device 3 of vehicle 2b thereby allowing the users of both vehicles 2a and 2b to converse with each other through the Bluetooth communication between the user interface devices 3 themselves.

The system 1 described above is extremely advantageous insofar as, in addition to being cost-effective due to the use of electronic equipment found typically on board a road vehicle, it helps to simplify communication between road vehicle users by making them unambiguously recognisable, as a function of the users connected.

It is clear finally that modifications and variants can be made to the system 1 herein described and illustrated without thereby departing from the scope of the present invention, as specified in the appended claims.

## Claims

1. Inter-vehicular short-range communication system comprising on-vehicle Bluetooth communication devices (3) having corresponding vehicles user interfaces **characterised in that** each on-vehicle Bluetooth communication device (3) is configured to:
• establish a Bluetooth communication with at least one mobile user communication device (11a, 11b, 11c) so as to receive therefrom a first user-entered identification name keyed in said mobile user communication device (11a, 11b, 11c) by a user;
• automatically detect other on-vehicle Bluetooth communication devices (3) within its own communication range and to pick up therefrom at least a corresponding user-entered identification name;
• signal to the user a list of the picked up user-entered identification names;
• allow the user to select from said list at least one user-entered identification name;
• establish a Bluetooth communication with the Bluetooth communication devices (3) having the selected user-entered identification name.

2. Inter-vehicular short-range communication system according to claim 1, wherein said on-vehicle Bluetooth communication device (3) is configured to: memorize pre-specified mobile user communication device identification code, and to establish a Bluetooth communication with other mobile user communication devices (11a, 11b, 11c) so as to receive therefrom the user-entered identification name and the pre-specified mobile user communication device identification code.

3. Inter-vehicular short-range communication system according to Claims 1 or 2, wherein said on-vehicle Bluetooth communication device (3) is configured to search for the user-entered identification name of the communication devices (3) which are able to implement a Bluetooth communication that satisfies an INTERCOM profile of the Bluetooth protocol.

4. Inter-vehicular short-range communication system according to any one of the previous claims, wherein said on-vehicle Bluetooth communication device (3) is configured to transmit a communication request containing its own user-entered identification name to the on-vehicle Bluetooth communication device (3) associated with the selected user-entered identification name.

5. Inter-vehicular short-range communication system according to claim 4, wherein said on-vehicle Bluetooth communication device (3) is configured to signal to the corresponding user a request for conversation by the on-vehicle Bluetooth communication device (3) associated with the user-entered identification name contained within said transmitted communication request.

6. Inter-vehicular short-range communication system according to claim 5, wherein said on-vehicle Bluetooth communication device (3) is configured to allow the user to refuse the Bluetooth communication with the Bluetooth communication device (3) associated with the user-entered identification name contained within said transmitted communication request.

7. Inter-vehicular short-range communication system according to any one of the previous claims, wherein said on-vehicle Bluetooth communication device (3) comprises a command keypad (5) and sound reproducing means (7) reproducing voice or sound messages.

8. Inter-vehicular short-range communication system according to any one of the previous claims, wherein said on-vehicle Bluetooth communication device (3) comprises display means (8) displaying said user-entered identification names, sound message acquisition means (9) configured to allow the user to talk to other vehicles users, and a short-range Bluetooth wireless communication module (10).

9. Inter-vehicular short-range communication system according to any one of the previous claims, wherein said on-vehicle Bluetooth communication device (3) comprises a on-board voice device.

10. Inter-vehicular short-range communication system according to any one of the previous claims, wherein said mobile user communication device (11a, 11b, 11c) comprises a mobile telephone (11a) and/or a computer (11b) and/or a PDA (11c).

## Patentansprüche

1. Fahrzeug-Fahrzeug-Kommunikationssystem mit kurzer Reichweite, umfassend Bluetooth-Kommunikationsgeräte (3) im Fahrzeug, welche entsprechende Fahrzeug-Benutzerschnittstellen aufweisen, **dadurch gekennzeichnet, dass** jedes Bluetooth-Kommunikationsgerät (3) im Fahrzeug gestaltet ist zum:
• Herstellen einer Bluetooth-Kommunikation mit wenigstens einem mobilen Benutzer-Kommunikationsgerät (11a, 11b, 11c), um so von demselben einen ersten benutzereingegebenen Kennungsnamen zu empfangen, welcher durch einen Benutzer in das mobile Benutzer-Kommunikationsgerät (11a, 11b, 11c) eingegeben wird;
• automatisches Erkennen weiterer Bluetooth-Kommunikationsgeräte (3) im Fahrzeug, innerhalb der eigenen Kommunikationsreichweite, und Aufnehmen wenigstens eines entsprechenden benutzereingegebenen Kennungsnamens von denselben;
• Signalisieren, an den Benutzer, einer Liste der aufgenommenen benutzereingegebenen Kennungsnamen;
• Ermöglichen, dass der Benutzer aus der Liste wenigstens einen benutzereingegebenen Kennungsnamen auswählt;
• Herstellen einer Bluetooth-Kommunikation mit den Bluetooth-Kommunikationsgeräten (3), welche den ausgewählten benutzereingegebenen Kennungsnamen aufweisen.

2. Fahrzeug-Fahrzeug-Kommunikationssystem mit kurzer Reichweite nach Anspruch 1, wobei das Bluetooth-Kommunikationsgerät (3) im Fahrzeug gestaltet ist zum: Speichern eines zuvor spezifizierten Kennungscodes des mobilen Benutzer-Kommunikationsgeräts, und zum Herstellen einer Bluetooth-Kommunikation mit weiteren mobilen Benutzer-Kommunikationsgeräten (11a, 11b, 11c), um so von denselben den benutzereingegebenen Kennungsnamen und den zuvor spezifizierten Kennungscode des mobilen Benutzer-Kommunikationsgeräts zu empfangen.

3. Fahrzeug-Fahrzeug-Kommunikationssystem mit kurzer Reichweite nach Anspruch 1 oder 2, wobei das Bluetooth-Kommunikationsgerät (3) im Fahrzeug gestaltet ist zum Suchen des benutzereingegebenen Kennungsnamens der Kommunikationsgeräte (3), welche geeignet sind, eine Bluetooth-Kommunikation zu implementieren, die einem INTERCOM Profile des Bluetooth-Protokolls genügt.

4. Fahrzeug-Fahrzeug-Kommunikationssystem mit kurzer Reichweite nach einem der vorhergehenden Ansprüche, wobei das Bluetooth-Kommunikationsgerät (3) im Fahrzeug gestaltet ist zum Senden einer Kommunikationsanforderung, welche den eigenen benutzereingegebenen Kennungsnamen enthält, zu dem Bluetooth-Kommunikationsgerät (3) im Fahrzeug, welches dem ausgewählten benutzereingegebenen Kennungsnamen zugeordnet ist.

5. Fahrzeug-Fahrzeug-Kommunikationssystem mit kurzer Reichweite nach Anspruch 4, wobei das Bluetooth-Kommunikationsgerät (3) im Fahrzeug gestaltet ist einen entsprechenden Benutzer eine Anforderung zur Konversation zu senden und zwar über das Bluetooth-Kommunikationsgerät (3) im Fahrzeug, welches dem benutzereingegebenen Kennungsnamen, der in der Kommunikationsanforderung enthalten ist, zugeordnet ist.

6. Fahrzeug-Fahrzeug-Kommunikationssystem mit kurzer Reichweite nach Anspruch 5, wobei das Bluetooth-Kommunikationsgerät (3) im Fahrzeug gestaltet ist zum Ermöglichen, dass der Benutzer die Bluetooth-Kommunikation mit dem Bluetooth-Kommunikationsgerät (3) ablehnt, welches dem benutzereingegebenen Kennungsnamen zugeordnet ist, der in der gesendeten Kommunikationsanforderung enthalten ist.

7. Fahrzeug-Fahrzeug-Kommunikationssystem mit kurzer Reichweite nach einem der vorhergehenden Ansprüche, wobei das Bluetooth-Kommunikationsgerät (3) im Fahrzeug ein Tastenfeld (5) umfasst, und Tonwiedergabemittel (7), welche Sprach- oder Tonnachrichten wiedergeben.

8. Fahrzeug-Fahrzeug-Kommunikationssystem mit kurzer Reichweite nach einem der vorhergehenden Ansprüche, wobei das Bluetooth-Kommunikationsgerät (3) im Fahrzeug Anzeigemittel (8) umfasst, welche die benutzereingegebenen Kennungsnamen anzeigen, Tonnachricht-Aufzeichnungsmittel (9), welche gestaltet sind es dem Benutzer zu ermöglichen mit Benutzern anderer Fahrzeuge zu sprechen, und ein Bluetooth-Funkkommunikationsmodul (10) mit kurzer Reichweite.

9. Fahrzeug-Fahrzeug-Kommunikationssystem mit kurzer Reichweite nach einem der vorhergehenden Ansprüche, wobei das Bluetooth-Kommunikationsgerät (3) im Fahrzeug ein eingebautes Sprachgerät umfasst.

10. Fahrzeug-Fahrzeug-Kommunikationssystem mit kurzer Reichweite nach einem der vorhergehenden Ansprüche, wobei das mobile Benutzer-Kommunikationsgerät (11a, 11b, 11c) ein Mobiltelefon (11a) und/oder einen Computer (11b) und/oder einen PDA (11c) umfasst.

## Revendications

1. Système de communication à courte portée intervéhiculaire comprenant des dispositifs de communication Bluetooth embarqués (3) ayant des interfaces utilisateur de véhicule correspondantes **caractérisé en ce que** chaque dispositif de communication Bluetooth embarqué (3) est configuré pour :
• établir une communication Bluetooth avec au moins un dispositif de communication utilisateur mobile (11a, 11b, 11c) de sorte à recevoir de celui-ci un premier nom d'identification entré par utilisateur saisi dans ledit dispositif de communication utilisateur mobile (11a, 11b, 11c) par un utilisateur ;
• détecter automatiquement d'autres dispositifs de communication Bluetooth embarqués (3) dans sa propre portée de communication et pour y prélever au moins un nom d'identification entré par utilisateur correspondant ;
• signaler à l'utilisateur une liste des noms d'identification entrés par utilisateur prélevés ;
• permettre à l'utilisateur de choisir dans ladite liste au moins un nom d'identification entré par utilisateur ;
• établir une communication Bluetooth avec les dispositifs de communication Bluetooth (3) ayant le nom d'identification entré par utilisateur choisi.

2. Système de communication à courte portée intervéhiculaire selon la revendication 1, dans lequel ledit dispositif de communication Bluetooth embarqué (3) est configuré pour : mémoriser un code d'identification de dispositif de communication utilisateur mobile préspécifié, et pour établir une communication Bluetooth avec d'autres dispositifs de communication utilisateur mobiles (11a, 11b, 11c) de sorte à recevoir de ceux-ci le nom d'identification entré par utilisateur et le code d'identification de dispositif de communication utilisateur mobile préspécifié.

3. Système de communication à courte portée intervéhiculaire selon les revendications 1 ou 2, dans lequel ledit dispositif de communication Bluetooth embarqué (3) est configuré pour rechercher le nom d'identification entré par utilisateur des dispositifs de communication (3) qui sont capables de mettre en oeuvre une communication Bluetooth qui satisfait un profil INTERCOM du protocole Bluetooth.

4. Système de communication à courte portée intervéhiculaire selon l'une quelconque des revendications précédentes, dans lequel ledit dispositif de communication Bluetooth embarqué (3) est configuré pour transmettre une requête de communication contenant son propre nom d'identification entré par utilisateur au dispositif de communication Bluetooth embarqué (3) associé au nom d'identification entré par utilisateur choisi.

5. Système de communication à courte portée intervéhiculaire selon la revendication 4, dans lequel ledit dispositif de communication Bluetooth embarqué (3) est configuré pour signaler à l'utilisateur correspondant une requête de conversation par le dispositif de communication Bluetooth embarqué (3) associé au nom d'identification entré par utilisateur contenu dans ladite requête de communication transmise.

6. Système de communication à courte portée intervéhiculaire selon la revendication 5, dans lequel ledit dispositif de communication Bluetooth embarqué (3) est configuré pour permettre à l'utilisateur de refuser la communication Bluetooth ave le dispositif de communication Bluetooth (3) associé au nom d'identification entré par utilisateur contenu dans ladite requête de communication transmise.

7. Système de communication à courte portée intervéhiculaire selon l'une quelconque des revendications précédentes, dans lequel ledit dispositif de communication Bluetooth embarqué (3) comprend un pavé numérique de commande (5) et des moyens de reproduction de son (7) reproduisant des messages vocaux ou sonores.

8. Système de communication à courte portée intervéhiculaire selon l'une quelconque des revendications précédentes, dans lequel ledit dispositif de communication Bluetooth embarqué (3) comprend des moyens d'affichage (8) affichant lesdits noms d'identification entrés par utilisateur, des moyens d'acquisition de message sonore (9) configurés pour permettre à un utilisateur de parler à des utilisateurs d'autres véhicules, et un module de communication sans fil Bluetooth à courte portée (10).

9. Système de communication à courte portée intervéhiculaire selon l'une quelconque des revendications précédentes, dans lequel ledit dispositif de communication Bluetooth embarqué (3) comprend un dispositif vocal à bord.

10. Système de communication à courte portée intervéhiculaire selon l'une quelconque des revendications précédentes, dans lequel ledit dispositif de communication utilisateur mobile (11a, 11b, 11c) comprend un téléphone mobile (11a) et/ou un ordinateur (11b) et/ou un assistant numérique personnel (11c).
